# FASCICULE DE BREVET EUROPEEN

(11) **EP 1 821 398 B1**
(45) Date de publication et mention de la délivrance du brevet: **21.09.2011**
(21) Numéro de dépôt: 07101915.2
(22) Date de dépôt: 07.02.2007
(51) Int. Cl.: H02M 7/08

(54) **Convertisseur AC/DC à autotransformateur**
AC/DC-Wandler mit Spartransformator
AC/DC converter with autotransformer

(30) Priorité: 10.02.2006 FR 0650476
(43) Date de publication de la demande: 22.08.2007
(73) Titulaire: Artus, 49241 Avrille (FR)
(72) Inventeur: Brochu, Eric, 49800 Sarrigne (FR); Dauzon, Daniel, 49000 Angers (FR); Leboisselier, Joël, 49500 Segre (FR)
(74) Mandataire: David, Alain

(56) Documents cités:
- EP-A1- 1 555 745
- FR-A- 1 139 199
- US-A- 5 933 338
- US-A- 6 118 362
- SEWAN CHOI ET AL: "Polyphase transformer arrangements with reduced kVA capacities for harmonic current reduction in rectifier type utility interface" POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, vol. 1, 18 juin 1995 (1995-06-18), pages 353-359, XP010150581 ISBN: 0-7803-2730-6

## Description

### Domaine de l'invention

La présente invention se rapporte au domaine des convertisseurs alternatif/continu et elle concerne plus particulièrement un convertisseur AC/DC à autotransformateur.

### Art antérieur

Le recours à des convertisseurs AC/DC est bien connu et cela dans tout type d'industrie. Dans les applications aéronautiques, pour limiter les courants harmoniques et réduire la masse et le volume des équipements embarqués, les transformateurs équipant habituellement ces convertisseurs sont avantageusement remplacés par des autotransformateurs.

La figure 4 illustre, comme il est connu notamment du brevet US 6 118 362, un convertisseur AC/DC 10 alimentant en tension continue une charge 12, par exemple un onduleur, à partir d'un réseau d'alimentation électrique alternatif 14. Ce convertisseur comporte un autotransformateur 16 dont les deux secondaires sont reliés à deux ponts redresseurs 18, 20 dont les deux sorties sont à leur tour combinées par deux bobines dites d'interphases 22, 24. Les deux points milieux de ces deux bobines constituent la sortie du convertisseur 10 à laquelle est relié un circuit de filtrage comportant par exemple une self série de lissage 26 et un condensateur de stockage 28 disposé en parallèle avec la charge 12. Lorsque la charge est un onduleur, la self de lissage permet de lisser les appels de courant du condensateur à la mise sous tension et d'augmenter la réjection harmonique de l'onduleur.

Ce type de convertisseur donne globalement satisfaction. Toutefois, l'autotransformateur créant une tension gênante entre les deux ponts redresseurs, celle-ci doit être bloquée par les deux inductances interphases qui sont donc dimensionnées en conséquence à la fois en tension en en courant. Or, ce dimensionnement est problématique pour les applications embarquées.

### Objet et définition de l'invention

La présente invention propose donc un convertisseur AC/DC à autotransformateur dont l'encombrement est particulièrement réduit.

Ce but est atteint par un convertisseur AC/DC comportant un autotransformateur ayant un bobinage primaire relié à un réseau d'alimentation électrique alternative et deux bobinages secondaires reliés à deux circuits redresseurs fonctionnant en parallèle pour délivrer une tension continue à une charge, les deux sorties d'une même polarité des deux circuits redresseurs étant reliées aux deux premières extrémités d'une première et d'une deuxième bobines dont les secondes extrémités sont reliées entre elles pour former une première sortie du convertisseur et les deux sorties d'une même autre polarité des deux circuits redresseurs étant reliées aux deux premières extrémités d'une troisième et d'une quatrième bobines dont les secondes extrémités sont reliées entre elles pour former une seconde sortie du convertisseur, caractérisé en ce que lesdites première, deuxième, troisième et quatrième bobines sont enroulées sur un noyau magnétique commun.

Ainsi, en remplaçant les deux inductances interphases par une inductance unique, on obtient une notable réduction de masse et de volume du convertisseur facilitant son utilisation en matière aéronautique.

### Brève description des dessins

Les caractéristiques et avantages de la présente invention ressortiront mieux de la description suivante, faite à titre indicatif et non limitatif, en regard des dessins annexés sur lesquels :

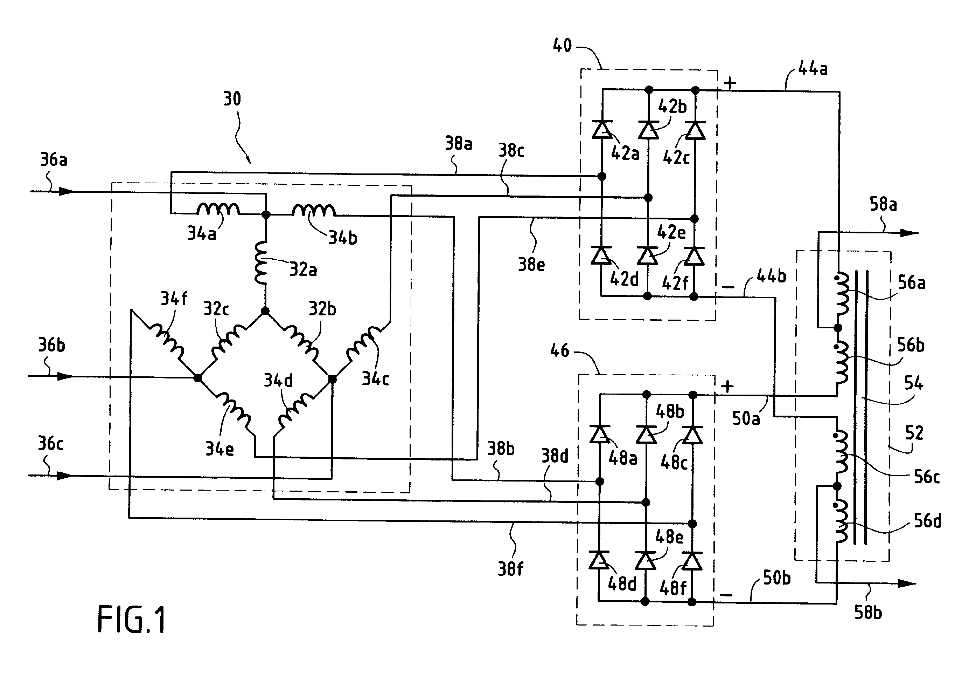

- la figure 1 illustre un exemple de réalisation d'un convertisseur AC/DC à autotransformateur conforme à la présente invention,
- la figure 2 montre certains signaux disponibles au niveau du convertisseur de la figure 1,
- la figure 3 montre un exemple de réalisation d'une bobine intercircuit du convertisseur de la figure 1, et

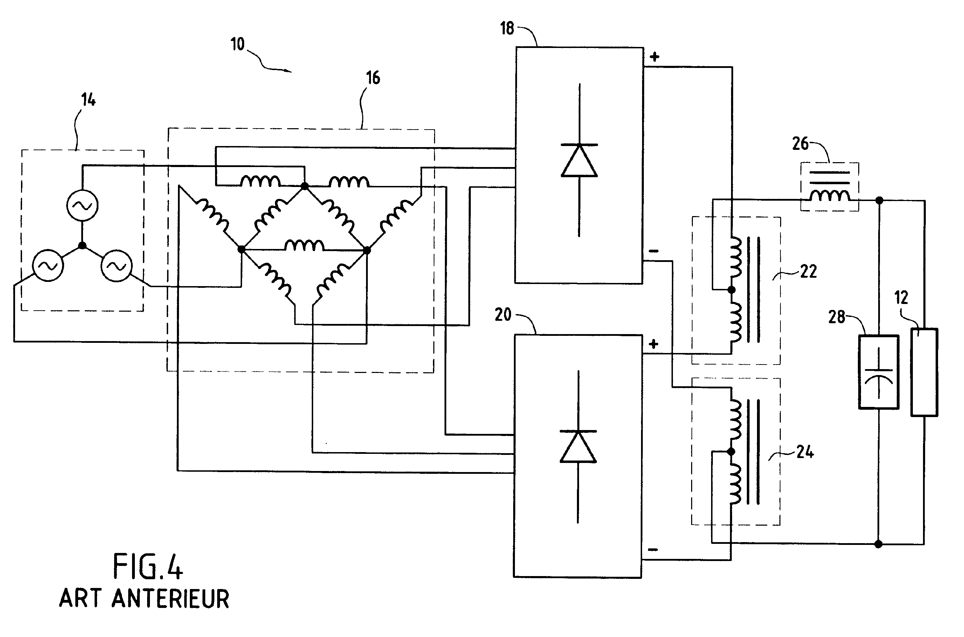

- la figure 4 montre un convertisseur AC/DC de l'art antérieur.

### Description détaillée d'un mode de réalisation préférentiel

La figue 1 montre un exemple d'un convertisseur AC/DC à autotransformateur selon l'invention.

Ce convertisseur comporte comme il est connu un autotransformateur 30 avec des premier 32a, deuxième 32b et troisième 32c enroulements primaires reliés entre eux pour former un bobinage primaire en étoile et des premier 34a, deuxième 34b, troisième 34c, quatrième 34d, cinquième 34e et sixième 34f enroulements secondaires associés trois à trois pour former deux bobinages secondaires en étoile. Bien entendu, ces configurations en étoile au primaire et aux secondaires ne sont pas exclusives de la présente invention et, par exemple, une configuration avec un primaire et des secondaires en triangle ou encore une configuration mixte est tout aussi envisageable.

L'autotransformateur assure une conversion de l'alimentation alternative triphasée délivrée sur les conducteurs d'entrée 36a à 36c par un réseau d'alimentation électrique, par exemple un réseau d'alimentation triphasé à fréquence variable 115V/400Hz, en une alimentation alternative hexaphasée dont les six phases sont délivrées sur les conducteurs de sortie 38a à 38f. Il permet de créer deux sous réseaux déphasés entre eux de 30°, soit +15° et -15° par rapport au réseau d'alimentation.

Les trois phases disponibles sur les conducteurs 38a, 38c, 38e sont ensuite redressées par un premier pont redresseur 40 à six diodes 42a à 42f qui délivre une première tension continue entre ces deux sorties 44a, 44b et les trois autres phases disponibles sur les conducteurs 38b, 38d, 38f sont redressées en parallèle par un second pont redresseur 46 à six diodes 48a à 48f qui délivre une seconde tension continue entre ses deux sorties 50a, 50b. Les première et seconde tensions sont identiques mais avec une ondulation résiduelle déphasée de 30°.

Selon l'invention, les quatre sorties 44a, 44b ; 50a, 50b des deux circuits redresseurs 40, 46 sont reliées aux quatre bornes d'entrées d'une inductance unique 52. Cette inductance que l'on nommera dans la suite de la description inductance d'intercircuit comporte un noyau magnétique commun 54 sur lequel sont enroulées quatre bobines 56a à 56d. Plus précisément, la première bobine 56a est connectée par une première extrémité à la sortie 44a de la première polarité du premier pont redresseur 40 et par une seconde extrémité à une première extrémité de la deuxième bobine 56b dont la seconde extrémité est connectée à la sortie 50a de même polarité du second pont redresseur 46. De même, la troisième bobine 56c est connectée par une première extrémité à la sortie 44b de la seconde polarité du premier pont redresseur 40 et par une seconde extrémité à une première extrémité de la quatrième bobine 56d dont la seconde extrémité est connectée à la sortie 50b de même polarité du second pont redresseur 46. Le premier point de jonction entre la première et la deuxième bobine et le second point de jonction entre la troisième et la quatrième bobine constituent les deux bornes de sortie 58a, 58b du convertisseur 10 à laquelle peut alors être reliée la charge précédée classiquement par un étage de filtrage.

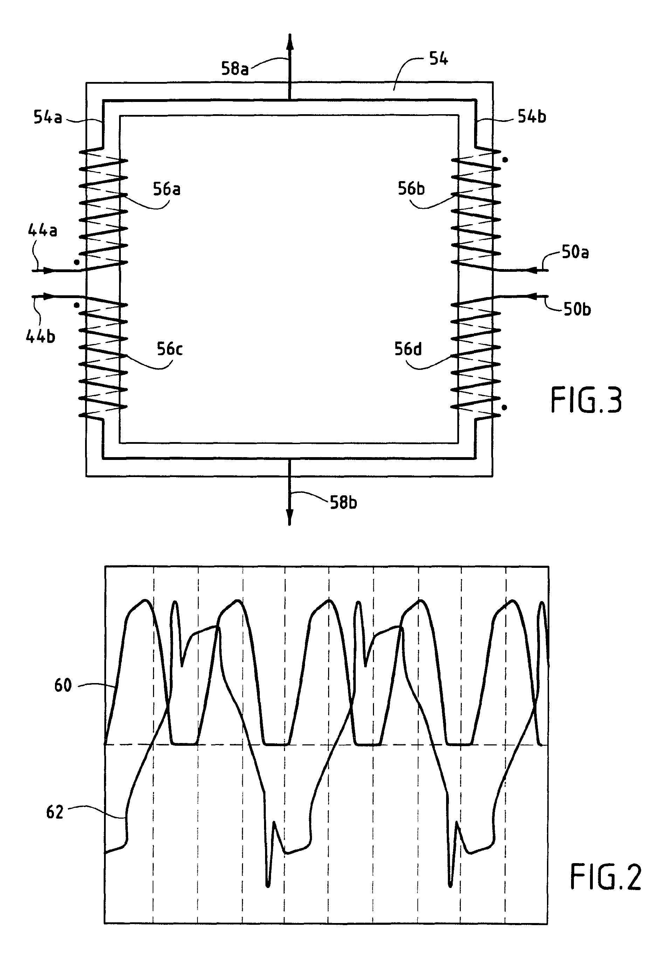

La figure 2 illustre certaines des tensions obtenues aux bornes des bobines de l'inductance interphase d'un convertisseur alimenté par une tension alternative de 115 V/400 Hz. On note que la fréquence du signal 60 est le triple de celle de la fréquence d'entrée 62 et que, du fait de la présence sur la ligne de sortie de deux bobines en série, la tension crête à crête est d'environ la moitié de celle de la tension maximale d'entrée.

La figure 3 montre un exemple de réalisation de l'inductance intercircuit. Le noyau magnétique 54 de cette inductance qui se présente avantageusement sous la forme d'un empilement ou juxtaposition de tôles ou lamelles matériau magnétique de grande perméabilité relative (par exemple un acier à texture siliconé ou un alliage amorphe) peut être constitué en une seule partie (c'est-à-dire sans entrefer) ou être constitué de deux parties, l'une en forme de [et l'autre en forme de], destinées à être réunies ensemble en minimisant alors l'entrefer.

Dans un exemple préférentiel de réalisation, les quatre bobines 56a à 56d sont enroulées autour des deux colonnes 54a, 54b du noyau magnétique commun et sont de préférence noyées dans une résine d'amortissement. Plus précisément, les première 56a et troisième 56c bobines sont enroulées sur une même colonne 54a et les deuxième 56b et quatrième 56d bobines sont enroulées sur la colonne opposée 54b.

Le dimensionnement de l'inductance intercircuit sera réalisé en vue de la recherche d'un poids minimal. Il peut être effectué au moyen des formules de calcul classiques de transformateur. Ainsi, on choisira tout d'abord un circuit magnétique avec un champ d'induction élevé, puis on calculera le nombre de spires maximal évitant la saturation de ce circuit, on calculera alors la section de fil nécessaire (Sc= nombre de spires x 4 enroulements x aire d'un fil) et enfin le facteur d'utilisation (Ku= Sc/window area) et l'on vérifiera que les valeurs ainsi obtenues sont acceptables.

Ainsi, on conçoit aisément qu'en ayant recours à une seule inductance intercircuit au lieu des deux inductances interphases habituelles, la masse correspondante est divisée par deux et l'encombrement général du convertisseur en est réduit d'autant.

Bien entendu, la présente invention trouve aussi application pour des configurations de nombre de phases et de déphasages différentes de celle à 6 phases et 30° de déphasage décrite précédemment.

## Revendications

1. Convertisseur AC/DC comportant un autotransformateur ayant un bobinage primaire relié à un réseau d'alimentation électrique alternative (14) et deux bobinages secondaires reliés à deux circuits redresseurs (40, 46) fonctionnant en parallèle pour délivrer une tension continue à une charge (12), les deux sorties d'une même polarité (44a, 50a) des deux circuits redresseurs étant reliées aux deux premières extrémités d'une première et d'une deuxième bobines (56a, 56b) dont les secondes extrémités sont reliées entre elles pour former une première sortie (58a) du convertisseur et les deux sorties d'une même autre polarité (44b, 50b) des deux circuits redresseurs étant reliées aux deux premières extrémités d'une troisième et d'une quatrième bobines (56c, 56d) dont les secondes extrémités sont reliées entre elles pour former une seconde sortie (58b) du convertisseur, **caractérisé en ce que** lesdites première, deuxième, troisième et quatrième bobines sont enroulées sur un noyau magnétique commun (54).

## Claims

1. An AC/DC converter including an autotransformer having a primary winding connected to an AC power supply network (14) and two secondary windings connected to two rectifier circuits (40,46) operating in parallel to deliver a DC voltage to a load (12), the two samepolarity outputs (44a, 50a) of the two rectifier circuits being connected to respective first ends of a first coil (56a) and of a second coil (56b) whose second ends are connected together to form a first output (58a) of the converter, and the two outputs (44b, 50b) of the two rectifier circuits having the same other polarity being connected respectively to the first ends of a third coil (56c) and of a fourth coil (56d) whose second ends are connected together to form a second output (58b) of the converter, **characterised in that** said first, second, third, and fourth coils are wound on a common magnetic core (54).

## Patentansprüche

1. AC/DC-Wandler mit einem Spartransformator, der eine Primärwicklung, welche mit einem Wechselstromversorgungsnetz (14) verbunden ist, sowie zwei Sekundärwicklungen aufweist, die mit zwei parallel arbeitenden Gleichrichterschaltungen (40, 46) verbunden sind, um einer Last (12) eine Gleichspannung zu liefern, wobei die beiden Ausgänge mit einer gleichen Polarität (44a, 50a) der beiden Gleichrichterschaltungen mit den beiden ersten Enden einer ersten und einer zweiten Spule (56a, 56b) verbunden sind, deren zweite Enden miteinander verbunden sind, um einen ersten Ausgang (58a) des Wandlers zu bilden, und wobei die beiden Ausgänge mit einer gleichen anderen Polarität (44b, 50b) der beiden Gleichrichterschaltungen mit den beiden ersten Enden einer dritten und einer vierten Spule (56c, 56d) verbunden sind, deren zweite Enden miteinander verbunden sind, um einen zweiten Ausgang (58b) des Wandlers zu bilden, **dadurch gekennzeichnet, daß** die erste, die zweite, die dritte und die vierte Spule um einen gemeinsamen Magnetkern (54) gewickelt sind.
